# FASCICULE DE BREVET EUROPEEN

(11) **EP 3 405 652 B1**
(45) Date de publication et mention de la délivrance du brevet: **07.08.2019**
(21) Numéro de dépôt: 17706274.2
(22) Date de dépôt: 17.01.2017
(51) Int. Cl.: F01D 5/08, F01D 21/00, G01L 3/10, G01L 3/12

(54) **COUPLEMÈTRE À TORSION**
VERWINDUNGSDREHMOMENTSENSOR
TWISTING TORQUE SENSOR

(30) Priorité: 20.01.2016 FR 1650431
(43) Date de publication de la demande: 28.11.2018
(73) Titulaire: Safran Helicopter Engines, 64510 Bordes (FR)
(72) Inventeur: RENAULT, Lionel, 77550 Moissy-Cramayel (FR)
(74) Mandataire: Gevers & Orès
(86) Numéro de dépôt international: PCT/FR2017/050093
(87) Numéro de publication internationale: WO 2017/125671

(56) Documents cités:
- FR-A1- 2 993 657
- GB-A- 2 123 568
- GB-A- 2 187 843
- US-A1- 2011 056 309

## Description

### 1. Domaine technique de l'invention

L'invention concerne un couplemètre. En particulier, l'invention concerne un couplemètre à torsion destiné à mesurer un couple d'un élément en rotation, notamment dans une turbomachine d'un aéronef.

### 2. Arrière-plan technologique

Les couplemètres à torsion sont des dispositifs de mesure de couple dont le principe de fonctionnement est de mesurer la torsion d'un premier arbre, dit arbre de transmission, soumis au couple à mesurer, et de comparer une déformation angulaire due à cette torsion entre l'arbre de transmission et un deuxième arbre, dit arbre de référence, qui n'est pas soumis au couple à mesurer. La comparaison permet de déduire le couple à mesurer.

En particulier, la mesure de la déformation angulaire est effectuée grâce à l'ajout sur chaque arbre de dents de lecture formant une roue phonique, et l'acquisition par un capteur du passage de chaque dent devant le capteur. En l'absence de couple sur l'arbre de transmission, une dent de lecture de l'arbre de transmission et une dent de lecture de l'arbre de référence sont espacées d'une certaine distance. Lorsque l'arbre de transmission est soumis à un couple, la torsion résultante entraine la déformation de l'arbre et le déplacement d'une dent de lecture de l'arbre de transmission par rapport à une dent de lecture de l'arbre de référence. Ce déplacement entraine une variation du temps de passage de la dent devant le capteur par rapport à une dent de l'arbre de référence, et permet d'en déduire le couple auquel l'arbre est soumis.

Lors de l'utilisation d'un tel couplemètre dans un environnement dans lequel règne de fortes variations de température, par exemple dans une turbomachine d'un aéronef, la torsion de l'arbre de transmission peut être différente, pour un même couple à mesurer, selon la température de l'arbre de transmission. Ainsi, la déformation angulaire mesurée varie de la même façon, et le couple mesuré présente une erreur plus ou moins importante selon la température pour laquelle le couplemètre a été étalonné.

Pour prévenir les erreurs de mesure dues à la température variable à laquelle est soumise le couplemètre, plusieurs solutions ont été proposées.

Notamment, une solution proposée est d'utiliser des dents de lecture inclinées sur la roue phonique, permettant de réduire l'influence de la température. Néanmoins, la correction effectuée par l'inclinaison des dents de lecture est constante et ne dépend pas du couple. Cette correction est donc optimisée uniquement pour une plage de couple et introduit une erreur en dehors de cette plage.

Une autre solution est de placer le couplemètre dans un environnement confiné de sorte à ce qu'il ne subisse pas de variations de température. Néanmoins, le confinement du couplemètre réduit les variations de température, mais ne les supprime pas totalement. L'erreur de mesure n'est ainsi pas corrigée et la précision de mesure est affectée.

Les documents de l'état de l'art US 2011/056309 A1, FR 2 993 657 A1 et GB 2 187 843 A divulguent des exemples de couplemètres permettant de limiter les erreurs de mesure dues aux variations de température.

Les exigences de mesures de couple de plus en plus précises ont conduit les inventeurs à chercher de nouvelles solutions en réponse à ces problèmes.

### 3. Objectifs de l'invention

L'invention vise à pallier au moins certains des inconvénients des couplemètres à torsion connus.

En particulier, l'invention vise à fournir, dans au moins un mode de réalisation de l'invention, un couplemètre permettant une mesure de couple avec une grande précision.

L'invention vise aussi à fournir, dans au moins un mode de réalisation, un couplemètre dont la mesure de couple n'est pas affectée par les variations de température.

L'invention vise aussi à fournir, dans au moins un mode de réalisation de l'invention, un couplemètre pouvant être facilement adapté à plusieurs turbomachines d'aéronef.

### 4. Exposé de l'invention

Pour ce faire, l'invention concerne un couplemètre à torsion, comprenant un premier arbre, dit arbre de transmission, soumis au couple à mesurer, un deuxième arbre, dit arbre de référence, et un dispositif de mesure d'une déformation angulaire entre l'arbre de transmission et l'arbre de référence, ladite déformation angulaire étant représentative du couple à mesurer,
l'arbre de transmission comprenant un alésage formant une paroi interne et s'étendant d'une extrémité de l'arbre de transmission, dite entrée de l'arbre, à une extrémité opposée, dite sortie de l'arbre,
caractérisé en ce que le couplemètre comprend :
- une enceinte de confinement en température du premier et du deuxième arbre, et
- un circuit de circulation d'un fluide comprenant :
   - une portion constituée par ledit alésage de l'arbre de transmission,
   - un injecteur du fluide dans l'alésage au niveau de ladite entrée de l'arbre, et
   - un capteur de température, dit capteur principal de température, adapté pour mesurer la température du fluide dans le circuit de circulation du fluide, la température du fluide mesurée étant destinée à une correction de la mesure du couple.

Un couplemètre à torsion selon l'invention permet donc d'imposer une température à l'arbre de transmission grâce d'une part au confinement qui permet de réduire de façon importante l'influence de la température extérieure à l'arbre de transmission, et d'autre part à la circulation du fluide dans l'alésage formé dans l'arbre de transmission permettant d'imposer à l'arbre de transmission la température du fluide qui est connue car mesurée par le capteur principal de température. La température de l'arbre de transmission étant ainsi connue car très proche de la température du fluide, il est possible de prévoir son influence sur la déformation angulaire mesurée (due à la torsion de l'arbre de transmission) et donc d'effectuer une correction de la mesure de couple en fonction de cette température de l'arbre.

La mesure de la température du fluide grâce au capteur de température est plus simple qu'une mesure de la température de l'arbre de transmission.

En outre, un couplemètre selon l'invention permet de simplifier les procédures dites de conformation ou d'étalonnage, dans lesquels sont déterminés les paramètres de conformation permettant une mesure correcte du couple dans une situation de fonctionnement réel, par exemple lorsque le couplemètre est installé dans un moteur. Ces paramètres de conformation font par exemple le lien entre la température de l'arbre de transmission et la déformation angulaire mesurée, permettant d'en déduire le couple. Dans l'art antérieur, cette conformation doit être effectuée dans le moteur dans lequel le couplemètre doit être installé. En cas de modification sensible du moteur, la conformation du couplemètre doit être de nouveau effectuée. Dans l'invention, grâce au confinement et à la température imposée par le fluide, les paramètres de conformation sont indépendants du moteur dans lequel le couplemètre est installé et la procédure de conformation est donc simplifiée, car elle peut être effectuée dans un moteur d'essai pouvant être utilisé par tous les couplemètres selon l'invention, à conformer, ou bien dans un banc de conformation adapté sans nécessiter un moteur complet.

Le circuit de circulation du fluide et le capteur de température font partie d'un dispositif de correction de la mesure de couple. Ce dispositif de correction de la mesure de couple comprend un calculateur permettant, à partir de la mesure de température fournie par le capteur de température, d'effectuer la correction de la mesure de couple.

Le couplemètre peut en outre comprendre plusieurs capteurs de température. Néanmoins, la température du fluide variant peu du fait du confinement, un seul capteur de température est généralement nécessaire.

Avantageusement et selon une première variante de l'invention, l'arbre de transmission et l'arbre de référence sont coaxiaux, l'arbre de transmission étant disposé à l'intérieur de l'arbre de référence.

Selon cet aspect de l'invention, l'encombrement du couplemètre est fortement réduit. L'ensemble formé par l'arbre de transmission et l'arbre de référence est parfois appelé arbre de couplemètre.

Avantageusement et selon une deuxième variante de l'invention, l'arbre de transmission et l'arbre de référence sont coaxiaux, l'arbre de référence étant disposé à l'intérieur de l'arbre de transmission et le fluide circulant entre la paroi interne de l'arbre de transmission et une paroi externe de l'arbre de référence.

Selon cet aspect de l'invention, l'encombrement du couplemètre est fortement réduit, et le couplemètre est configuré pour que le fluide soit en contact de la paroi interne de l'arbre de transmission, de façon à réguler la température de l'arbre de transmission, malgré la présence de l'arbre de référence à l'intérieur de l'arbre de transmission, c'est-à-dire dans l'alésage de l'arbre de transmission.

Avantageusement et selon l'invention, le fluide est de l'huile et le circuit de circulation du fluide est un circuit hydraulique.

Selon cet aspect de l'invention, l'huile est un fluide largement utilisé dans le domaine industriel, dont les circuits de circulation sont maitrisés, et permettant un bon échange thermique avec l'arbre de transmission pour lui imposer sa température.

En outre, lors de l'utilisation du couplemètre dans une turbomachine, il est possible de réutiliser au moins en partie des circuits de circulation d'huile (aussi appelés circuits hydrauliques) existants. En particulier, le capteur principal de température peut être un capteur de température déjà existant dans la turbomachine pour une autre utilisation.

Selon d'autres variantes de l'invention, le fluide peut être du carburant (du kérosène par exemple), un gaz (de l'air par exemple), etc.

Avantageusement et selon l'invention, le capteur principal de température est adapté pour mesurer la température du fluide à l'entrée de l'arbre.

Selon cet aspect de l'invention, le capteur principal de température permet de connaître la température à l'entrée de l'arbre, qui est proche de la température qui sera imposée à l'arbre lors de la circulation du fluide dans l'alésage de l'arbre.

En outre, lors de l'utilisation du couplemètre dans une turbomachine, un capteur de température est fréquemment présent au début du circuit hydraulique avant de circuler dans les différents équipements, et peut donc être utilisé pour le couplemètre sans nécessiter l'installation d'un capteur de température supplémentaire qui serait redondant.

Avantageusement et selon ce dernier aspect de l'invention, le couplemètre comprend un capteur auxiliaire de température, adapté pour mesurer la température du fluide à la sortie de l'arbre.

Selon cet aspect de l'invention, l'ajout d'un second capteur à la sortie de l'arbre permet de détecter une éventuelle variation de la température du fluide suite à la traversée de l'arbre de transmission. Cette variation peut subvenir en cas de défaut de confinement des arbres et peut ainsi être prise en compte et corrigée grâce au second capteur. La mesure de la température est ainsi affinée et plus robuste.

Avantageusement et selon l'invention, l'alésage comprend deux sous-sections d'alésage reliés par une zone de transition, une première sous-section du côté de l'entrée de l'arbre, et une deuxième sous-section du côté de la sortie de l'arbre, la deuxième sous-section ayant un diamètre inférieur au diamètre de la première sous-section.

Selon cet aspect de l'invention, la réduction du diamètre de l'alésage permet une meilleure circulation de l'huile grâce à la formation d'une chicane au niveau de la zone de transition.

Avantageusement et selon ce dernier aspect de l'invention, la deuxième sous-section est désaxée par rapport à la première sous-section et à l'alésage.

L'invention concerne également une turbomachine comprenant un arbre en rotation, caractérisé en ce qu'elle comprend un couplemètre à torsion selon l'invention, adapté pour mesurer le couple de l'arbre en rotation.

L'invention concerne également un couplemètre et une turbomachine caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe partielle d'un couplemètre à torsion selon un premier mode de réalisation de l'invention,
- la figure 2 est une vue schématique en coupe d'une partie d'un couplemètre à torsion selon un deuxième mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté. Notamment, les longueurs des différents arbres représentés peuvent varier selon différents mode de réalisation de l'invention.

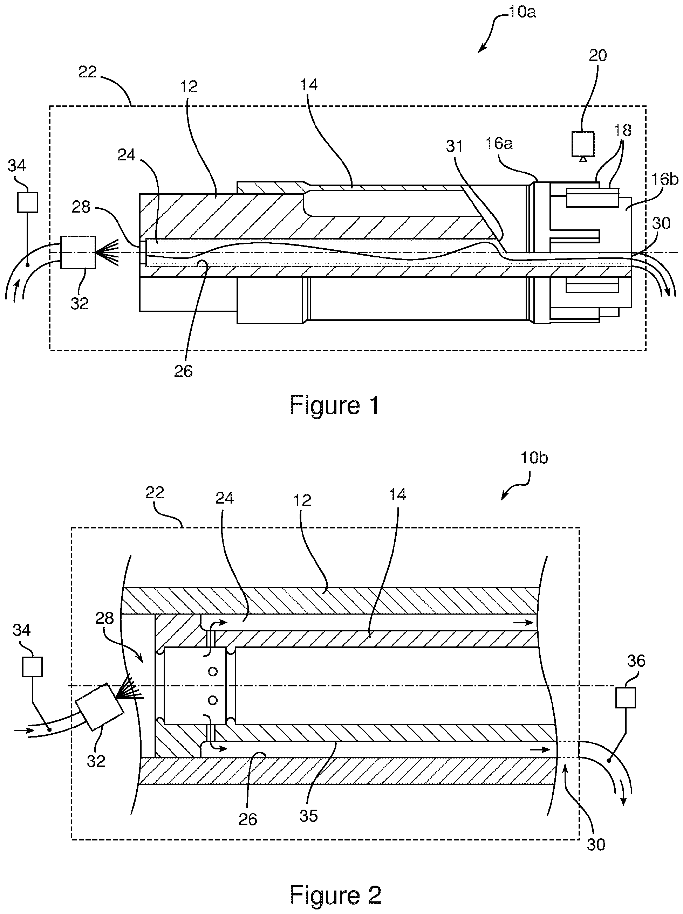

La figure 1 représente schématiquement en coupe partielle un couplemètre 100 à torsion selon un premier mode de réalisation de l'invention.

Le couplemètre comprend deux arbres, un premier arbre dit arbre 12 de transmission et un deuxième arbre dit arbre 14 de référence. Dans ce premier mode de réalisation, l'arbre 12 de transmission et l'arbre 14 de référence sont coaxiaux et l'arbre 12 de transmission est disposé à l'intérieur de l'arbre 14 de référence.

L'arbre 12 de transmission est soumis au couple à mesurer par le couplemètre 10 à torsion, tandis que l'arbre 14 de référence n'y est pas soumis. Ainsi, l'arbre 12 de transmission subit une torsion représentative du couple à mesurer.

L'arbre 12 de transmission et l'arbre 14 de référence comprennent chacun une roue 16a, 16b phonique comprenant des dents 18 de lecture, les deux roues 16a, 16b étant configurées pour qu'un capteur 20 de lecture détecte le passage des dents 18 de lectures des deux roues 16a, 16b phoniques. La lecture s'effectue par exemple de façon optique ou magnétique, et permet de déterminer le temps entre le passage de chaque dent et ainsi la déformation angulaire entre l'arbre 12 de transmission et l'arbre 14 de référence due au fait que seul l'arbre 12 de transmission est soumis au couple à mesurer. La déformation angulaire, représentative de la torsion de l'arbre 12 de transmission, permet de déterminer le couple à mesurer. Les roues 16a, 16b phonique et le capteur 20 de lecture forment un dispositif de mesure d'une déformation angulaire.

Pour réduire l'influence de la température sur le couplemètre 10, en particulier l'influence de la température sur la torsion de l'arbre 12 de transmission, le couplemètre 10 comprend d'une part une enceinte 22 de confinement en température permettant de supprimer ou de limiter l'influence des température extérieures au couplemètre 10, et d'autre part un circuit de circulation d'un fluide permettant d'imposer à l'arbre 12 de transmission une température, celle d'un fluide le traversant.

Le circuit de circulation du fluide comprend une portion qui est constituée d'un alésage 24 de l'arbre 12 de transmission, de sorte à faire circuler le fluide par cet alésage 24. L'alésage 24 forme une paroi 26 interne et s'étend d'une extrémité de l'arbre 12 de transmission, dite entrée 28 de l'arbre, à une extrémité opposée, dite sortie 30 de l'arbre. L'alésage 24 peut comprendre plusieurs sous-sections de diamètres différents reliés par des zones 31 de transition formant une ou plusieurs chicanes, de façon à améliorer la circulation du fluide.

Le fluide circule ainsi dans l'alésage 24 et au contact de la paroi 26 interne, et permet ainsi d'imposer sa température à l'arbre 12 de transmission, par transmission thermique. Le confinement de l'arbre 12 de transmission par l'enceinte de confinement permet en outre de s'assurer que les éventuelles variations de températures de l'arbre 12 de transmission sont bien liées uniquement à une variation de la température du fluide. Le trajet du fluide dans l'alésage 24 est représenté par une flèche traversant l'arbre 12 de transmission entre l'entrée 28 et la sortie 30 de l'arbre.

Le fluide est injecté dans l'alésage 24 au niveau de l'entrée 28 de l'arbre, grâce à un injecteur 32 du circuit de circulation du fluide. L'injecteur 32 permet la diffusion du fluide sur la paroi 26 interne de l'alésage, et la circulation du fluide le long de l'alésage 24. À la sortie de l'alésage 24, le fluide continue sa circulation dans le circuit de circulation du fluide.

Afin de connaitre la température du fluide, le circuit de circulation du fluide comprend au moins un capteur de température : dans ce mode de réalisation, un capteur 34 principal de température est disposé près de l'entrée 28 de l'arbre, avant l'injecteur 32, de façon à mesurer la température du fluide à l'entrée 28 de l'arbre.

La température du fluide ainsi mesurée permet d'effectuer une correction de la mesure de couple du couplemètre 10 : la torsion de l'arbre 12 de transmission étant variable selon sa température, connaitre cette température permet de déterminer la variation de la torsion et d'en déduire la correction à apporter au couple déterminé grâce au capteur 20 de lecture des roues 16a, 16b phoniques, de façon à obtenir une mesure du couple précise. Ce calcul de couple à partir de la mesure du capteur 20 de lecture et de la température mesurée par le capteur 34 principal de température peut-être effectué par exemple dans un calculateur (non représenté).

L'arbre 14 de référence ne nécessite pas de circuit de circulation du fluide car il n'est pas soumis au couple et donc ne présente pas de torsion variable selon sa température.

La figure 2 représente schématiquement une partie d'un couplemètre 200 à torsion selon un deuxième mode de réalisation de l'invention.

Comme dans le premier mode de réalisation, le couplemètre comprend deux arbres, un arbre 12 de transmission et un arbre 14 de référence. Dans ce deuxième mode de réalisation, l'arbre 12 de transmission et l'arbre 14 de référence sont coaxiaux et contrairement au premier mode de réalisation, c'est l'arbre 14 de référence qui est disposé à l'intérieur de l'arbre 12 de transmission. Pour simplifier la figure, les parties du couplemètre 10 comprenant les roues phoniques ne sont pas représentés car similaires au premier mode de réalisation.

Ainsi, la circulation du fluide injecté par l'injecteur 32 s'effectue dans l'alésage 24, entre la paroi 26 interne de l'arbre de transmission et une paroi 35 externe de l'arbre 14 de référence. Des flèches sur la figure représentent le trajet du fluide dans le couplemètre.

En outre, dans ce deuxième mode de réalisation, le couplemètre 10 comprend un capteur 34 principal de température et un capteur 36 auxiliaire de température permettant une seconde mesure de la température au niveau de la sortie de l'arbre. Ce capteur 36 auxiliaire de température permet d'affiner la mesure et est utile en cas de mauvais confinement de l'arbre 12 de transmission par l'enceinte 22 de confinement, engendrant une variation de la température de l'arbre 12 de transmission due à un élément extérieur. En pratique, un confinement imparfait de l'arbre 12 de transmission entraine une variation de température entre la valeur à l'entrée de l'arbre, mesurée par le capteur 34 principal de température, et la valeur à la sortie de l'arbre, mesurée par le capteur 36 auxiliaire de température, qui reste faible. La valeur de température mesurée utilisée pour la correction de la mesure du couplemètre 10 pourra être par exemple la moyenne entre les températures mesurées à l'entrée et à la sortie de l'arbre, pour tenir compte de la faible variation.

Le fluide utilisé dans le premier et le deuxième mode de réalisation est par exemple de l'huile. En particulier, lors de l'utilisation d'un couplemètre selon l'un de ces modes de réalisation dans une turbomachine d'aéronef, la turbomachine comprend un circuit hydraulique d'huile destiné à alimenter divers équipements. L'huile de ce circuit hydraulique peut-être utilisée pour alimenter le circuit de circulation de fluide du couplemètre. En outre, des éléments du circuit hydraulique peuvent être réutilisés, par exemple un capteur de température de l'huile distribuée par le circuit hydraulique peut être utilisé comme capteur principal de température du couplemètre, si l'huile ne subit pas de variation de température entre ce capteur et l'entrée de l'arbre.

Selon d'autres modes de réalisation, le fluide utilisé peut par exemple être du carburant (notamment du kérosène) ou du gaz (notamment de l'air), qui sont aussi parfois disponibles dans une turbomachine d'un aéronef.

## Revendications

1. Couplemètre à torsion, comprenant un premier arbre, dit arbre (12) de transmission, soumis au couple à mesurer, un deuxième arbre, dit arbre (14) de référence, et un dispositif de mesure d'une déformation angulaire entre l'arbre (12) de transmission et l'arbre (14) de référence, ladite déformation angulaire étant représentative du couple à mesurer,
l'arbre (12) de transmission comprenant un alésage (24) formant une paroi (26) interne et s'étendant d'une extrémité de l'arbre (12) de transmission, dite entrée (28) de l'arbre, à une extrémité opposée, dite sortie (30) de l'arbre,
**caractérisé en ce que**
le couplemètre comprend :
- une enceinte (22) de confinement en température du premier et du deuxième arbre, et
- un circuit de circulation d'un fluide comprenant :
- une portion constituée par ledit alésage (24) de l'arbre (12) de transmission,
- un injecteur (32) du fluide dans l'alésage (24) au niveau de ladite entrée (28) de l'arbre, et
- un capteur de température, dit capteur (34) principal de température, adapté pour mesurer la température du fluide dans le circuit de circulation du fluide, la température du fluide mesurée étant destinée à une correction de la mesure du couple.

2. Couplemètre selon la revendication 1, **caractérisé en ce que** l'arbre (12) de transmission et l'arbre (14) de référence sont coaxiaux, l'arbre (12) de transmission étant disposé à l'intérieur de l'arbre (14) de référence.

3. Couplemètre selon la revendication 1, **caractérisé en ce que** l'arbre (12) de transmission et l'arbre (14) de référence sont coaxiaux, l'arbre (14) de référence étant disposé à l'intérieur de l'arbre (12) de transmission et le fluide circulant entre la paroi (26) interne de l'arbre (12) de transmission et une paroi (35) externe de l'arbre (14) de référence.

4. Couplemètre selon l'une des revendications 1 à 3, **caractérisé en ce que** le fluide est de l'huile et le circuit de circulation du fluide est un circuit hydraulique.

5. Couplemètre selon l'une des revendications 1 à 4, **caractérisé en ce que** le capteur (34) principal de température est adapté pour mesurer la température du fluide à l'entrée (28) de l'arbre.

6. Couplemètre selon la revendication 5, **caractérisé en ce qu'**il comprend un capteur (36) auxiliaire de température, adapté pour mesurer la température du fluide à la sortie (30) de l'arbre.

7. Couplemètre selon l'une des revendications 1 à 6, **caractérisé en ce que** l'alésage (24) comprend deux sous-sections d'alésage reliés par une zone (31) de transition, une première sous-section du côté de l'entrée (28) de l'arbre, et une deuxième sous-section du côté de la sortie (30) de l'arbre, la deuxième sous-section ayant un diamètre inférieur au diamètre de la première sous-section.

8. Couplemètre selon la revendication 7, **caractérisé en ce que** la deuxième sous-section est désaxée par rapport à la première sous-section et à l'alésage (24).

9. Turbomachine, comprenant un arbre en rotation, **caractérisé en ce qu'**elle comprend un couplemètre (10a, 10b) à torsion selon l'une des revendications 1 à 8, adapté pour mesurer le couple de l'arbre en rotation.

## Patentansprüche

1. Verwindungsdrehmomentsensor, der eine erste Welle, Übertragungswelle (12) genannt, die dem zu messenden Drehmoment unterliegt, eine zweite Welle, Referenzwelle (14) genannt, und eine Messvorrichtung einer Winkelverformung zwischen der Übertragungswelle (12) und der Referenzwelle (14) umfasst, wobei die Winkelverformung für das zu messende Drehmoment repräsentativ ist,
wobei die Übertragungswelle (12) eine Bohrung (24) umfasst, die eine Innenwand (26) bildet und sich von einem Ende der Übertragungswelle (12), Eingang (28) der Welle genannt, zu einem entgegengesetzten Ende, Ausgang der Welle (30) genannt, erstreckt,
**dadurch gekennzeichnet, dass** der Verwindungsdrehmomentsensor Folgendes umfasst:
- eine Umhüllung (22) zum Einschließung in Temperatur der ersten und der zweiten Welle, und
- einen Umlaufkreislauf eines Fluids, der Folgendes umfasst:
- einen Abschnitt, der aus der Bohrung (24) der Übertragungswelle (12) besteht,
- einen Injektor (32) des Fluids in die Bohrung (24) im Bereich des Eingangs (28) der Welle, und
- einen Temperatursensor, Temperaturhauptsensor (34) genannt, der angepasst ist, um die Temperatur des Fluids in dem Umlaufkreislauf des Fluids zu messen, wobei die Messtemperatur des Fluids für eine Korrektur der Messung des Drehmoments bestimmt ist.

2. Verwindungsdrehmomentsensor nach Anspruch 1, **dadurch gekennzeichnet, dass** die Übertragungswelle (12) und die Referenzwelle (14) koaxial sind, wobei die Übertragungswelle (12) in dem Inneren der Referenzwelle (14) angeordnet ist.

3. Verwindungsdrehmomentsensor nach Anspruch 1, **dadurch gekennzeichnet, dass** die Übertragungswelle (12) und die Referenzwelle (14) koaxial sind, wobei die Referenzwelle (14) in dem Inneren der Übertragungswelle (12) angeordnet ist, und das Fluid zwischen der Innenwand (26) der Übertragungswelle (12) und einer Außenwand (35) der Referenzwelle (14) zirkuliert.

4. Verwindungsdrehmomentsensor nach einem der Ansprüche 1 bis 3, **dadurch gekennzeichnet, dass** das Fluid Öl ist und der Umlaufkreislauf des Fluids ein Hydraulikkreislauf ist.

5. Verwindungsdrehmomentsensor nach einem der Ansprüche 1 bis 4, **dadurch gekennzeichnet, dass** der Temperaturhauptsensor (34) angepasst ist, um die Temperatur des Fluids an dem Eingang (28) der Welle zu messen.

6. Verwindungsdrehmomentsensor nach Anspruch 5, **dadurch gekennzeichnet, dass** er einen Temperaturhilfssensor (36) umfasst, der angepasst ist, um die Temperatur des Fluids an dem Ausgang (30) der Welle zu messen.

7. Verwindungsdrehmomentsensor nach einem der Ansprüche 1 bis 6, **dadurch gekennzeichnet, dass** die Bohrung (24) zwei Bohrungsunterquerschnitte umfasst, die durch eine Übergangszone (31) verbunden sind, einen ersten Unterquerschnitt auf der Seite des Eingangs (28) der Welle und einen zweiten Unterquerschnitt auf der Seite des Ausgangs (30) der Welle, wobei der zweite Unterquerschnitt einen Durchmesser aufweist, der kleiner ist als der Durchmesser des ersten Unterquerschnitts.

8. Verwindungsdrehmomentsensor nach Anspruch 7, **dadurch gekennzeichnet, dass** der zweite Unterquerschnitt bezüglich des ersten Unterquerschnitts und der Bohrung (24) axial verschoben ist.

9. Turbomaschine, das eine rotierende Welle umfasst, **dadurch gekennzeichnet, dass** sie einen Verwindungsdrehmomentsensor (10a, 10b) nach einem der Ansprüche 1 bis 8 umfasst, der angepasst ist, um das Drehmoment der rotierenden Welle zu messen.

## Claims

1. Twisting-torque sensor, comprising a first shaft, referred to as the transmission shaft (12), subjected to the torque to be measured, a second shaft (14), referred to as the reference shaft, and a device for measuring an angular deformation between the transmission shaft (12) and the reference shaft (14), said angular deformation representing the torque to be measured,
the transmission shaft (12) comprising a bore (24) forming an internal wall (26) and extending from one end of the transmission shaft (12), referred to as the input (28) of the shaft, to an opposite end, referred to as the output (30) of the shaft,
**characterised in that** the torque sensor comprises:
- a temperature-confinement enclosure (22) of the first and second shafts, and
- a fluid-circulation circuit, comprising:
- a portion constituted by said bore (24) of the transmission shaft (12),
- a fluid injector (32) into the bore (24) at said input (28) of the shaft, and
- a temperature sensor, referred to as the main temperature sensor (34), suitable for measuring the temperature of the fluid in the fluid-circulation circuit, the measured temperature of the fluid being intended for a correction of the torque measurement.

2. Torque sensor according to claim 1, **characterised in that** the transmission shaft (12) and the reference shaft (14) are coaxial, the transmission shaft (12) being arranged inside the reference shaft (14).

3. Torque sensor according to claim 1, **characterised in that** the transmission shaft (12) and the reference shaft (14) are coaxial, the reference shaft (14) being arranged inside the transmission shaft (12) and the fluid circulating between the internal wall (26) of the transmission shaft (12) and an external wall (35) of the reference shaft (14).

4. Torque sensor according to any of claims 1 to 3, **characterised in that** the fluid is oil and the fluid-circulation circuit is a hydraulic circuit.

5. Torque sensor according to any of claims 1 to 4, **characterised in that** the main temperature sensor (34) is suitable for measuring the temperature of the fluid at the input (28) of the shaft.

6. Torque sensor according to claim 5, **characterised in that** it comprises an auxiliary temperature sensor (36), suitable for measuring the temperature of the fluid at the output (30) of the shaft.

7. Torque sensor according to any of claims 1 to 6, **characterised in that** the bore (24) comprises two bore subsections connected by a transition zone (31), a first subsection on the same side as the shaft input (28), and a second subsection on the same side as the shaft output (30), the second subsection having a diameter smaller than the diameter of the first subsection.

8. Torque sensor according to claim 7, **characterised in that** the second subsection is offset with respect to the first subsection and to the bore (24).

9. Turbine engine, comprising a rotating shaft, **characterised in that** it comprises a twisting-torque sensor (10a, 10b) according to any of claims 1 to 8, suitable for measuring the torque of the rotating shaft.
